# EUROPÄISCHE PATENTANMELDUNG

(11) **EP 1 293 753 A1**
(43) Veröffentlichungstag der Anmeldung: **19.03.2003**
(21) Anmeldenummer: 02102266.0
(22) Anmeldetag: 02.09.2002
(51) Int. Cl.: G01B 11/00, G01B 11/02, G01B 11/22, G02B 21/00

(54) **Optischer Abstandsschalter und Bestückkopf, Bestückautomat und Verfahren zum Bestücken von Substraten mit Bauelementen unter Verwendung des optischen Abstandsschalters**

(30) Priorität: 13.09.2001 DE 10145167
(71) Anmelder: SIEMENS AKTIENGESELLSCHAFT, 80333 München (DE)
(72) Erfinder: Haas, Gerhard, Dr., 85764, Oberschleissheim (DE); Schick, Anton, 84149, Velden (DE)

(57) **Zusammenfassung**

Konfokaler Abstandsschalter (100) zur schnellen berührungsfreien Abstandsbestimmung mit einem punktförmigen gleichzeitig lichtaussendenden und lichtempfangenden Element, einer Abbildungsoptik (112), welche das lichtaussendende Element auf einen Schaltbereich (113) abbildet, und einer mit dem lichtempfangenden Element gekoppelten Lichterfassungseinrichtung, von welcher ein Signal (310) ausgegeben wird, wenn sich ein zumindest teilweise reflektierendes Objekt in den Schaltbereich (113) bewegt und reflektiertes Licht auf das lichtempfangende Element trifft. Bevorzugt ist das lichtaussendende und das lichtempfangende Element durch ein Lichtwellenleiterende (111) realisiert. Somit kann der optische Abstandsschalter (100) in zwei getrennte, über den Lichtwellenleiter (130) miteinander verbundene Module aufgeteilt werden, wobei ein rein optisches Modul (110) kompakt und bei geringem Gewicht realisiert werden kann. Die Erfindung schafft ferner ein Verfahren zum Bestücken von Substraten (200) mit Bauelementen (203) unter Verwendung des Abstandsschalters (100), bei dem die Aufsetzgeschwindigkeit der Bauelemente (203) unmittelbar vor dem Aufsetzen reduziert und somit bei einem insgesamt schnellen Bestückvorgang der Aufprall der Bauelemente (203) auf das Substrat (200) reduziert wird.

## Beschreibung

Die Erfindung betrifft einen optischen Abstandsschalter zur schnellen berührungsfreien Abstandsbestimmung nach dem konfokalen Abbildungsprinzip sowie einen Bestückkopf und einen Bestückautomaten zum Bestücken von Substraten mit Bauelementen unter Verwendung des optischen Abstandsschalters. Die Erfindung betrifft ferner ein Verfahren zum Bestücken von Substraten mit Bauelementen unter Verwendung des optischen Abstandsschalters.

Bei der automatischen Bestückung von Leiterplatten mit Bauelementen werden die Bauelemente von einer Abholstelle einer Bauelement-Zuführvorrichtung mittels einer Greifvorrichtung an die Stelle transportiert, an der das Bauelement auf die Leiterplatte aufgesetzt wird.

Unter dem Begriff Bauelemente werden im folgenden alle bestückfähigen Elemente verstanden, insbesondere elektronische Bauelemente, elektromechanische Bauelemente, Stecker und Steckverbindungen für elektrische und mechanische Kontakte sowie Abschirmbleche. Bestückfähige Elemente sind ferner beispielsweise Bare Die's bzw. einzelne Teile eines Halbleiterwafers, welche insbesondere nach dem Strukturieren und dem Schneiden des Wafers zu fertigen Bauelementen weiterverarbeitet werden.

Als Greifvorrichtungen dienen insbesondere sog. Saugpipetten, welche an einem Bestückkopf angeordnet sind und welche an ein Unterdrucksystem angeschlossen werden können. Mittels Saugpipetten können die zu bestückenden Bauelemente zügig von der Bauelemente-Zuführvorrichtung aufgenommen, von dort zuverlässig an die gewünschte Bestückposition transportiert und dort an einer genau definierten Aufsetzstelle abgegeben werden. Um bei modernen Bestückautomaten eine möglichst hohe Bestückrate zu erreichen, muss das Abholen der Bauteile von der Bauelement-Zuführvorrichtung, das Transportieren und das Aufsetzen dieser Teile auf Substrate möglichst schnell erfolgen. Gleichzeitig sollen aber auch das Bauelement, die Greifvorrichtung und das Substrat auf keinen Fall geschädigt werden. Beschädigungen an den zu bestückenden Bauelementen können beispielsweise dadurch auftreten, dass das zu bestückende Bauteil, welches beispielsweise von einer Saugpipette senkrecht von oben gehalten wird, mit einer zu großen Geschwindigkeit auf das Substrat aufgesetzt und durch den damit verbundenen hohen Aufprall beschädigt wird. Da insbesondere die Lage des Substrates beispielsweise durch Wölbungen signifikant um einen bestimmten Sollwert streuen kann, muss durch entsprechende Maßnahmen dafür gesorgt werden, dass die Greifvorrichtung und das zu bestückende Bauelement nicht zu hart auf das Substrat aufprallen.

Aus der US 5,285,946 ist dafür eine Vorrichtung zum Bestücken von elektronischen Bauelementen auf die Oberfläche von Leiterplatten bekannt, bei der eine Saugpipettenspitze als Greifvorrichtung federnd gelagert ist. Diese Federung bewirkt, dass beim Aufsetzen der Bauelemente auf das Substrat bzw. beim Aufsetzen der Saugpipette auf das Bauelement in einer Bauelementzuführvorrichtung der nötige Anpreßdruck erreicht wird, ohne dass aufgrund eines übermäßigen Druckes oder Aufpralls das Bauelement zerstört wird. Diese Lösung erhöht die Anfälligkeit des Greifers sowie seine Masse und reduziert die erreichbare Positioniergenauigkeit.

Eine weitere bekannte Möglichkeit zur Vermeidung von Beschädigungen an den zu bestückenden Bauelementen und gleichzeitig zur Erreichung einer relativ hohen Bestückleistung besteht darin, die Bauelemente nach einer zunächst schnellen Transportbewegung auf der letzten Wegstrecke vor dem Aufsetzen langsam zu bewegen, so dass das Bauelement nicht zu hart auf das Substrat auftrifft. Eine hohe Bestückleistung auf Kosten der einer höheren Fehlerrate erreicht man in diesem Fall dadurch, dass die schnelle Transportbewegung bis möglicht knapp vor dem zu bestückenden Substrat aufrecht gehalten wird. Eine geringe Wahrscheinlichkeit für Bestückfehler erreicht man dann, wenn die schnelle Transportbewegung so frühzeitig vor dem Aufsetzen reduziert wird, so dass ein zu harter Aufprall des Bauelements zuverlässig ausgeschlossen werden kann. Somit muss bei einer automatischen Bauelement-Bestückung immer ein Kompromiss zwischen einer möglichst hohen Bestückgeschwindigkeit einerseits und einer möglichst geringen durch zu harten Aufprall verursachten Bestückfehlerrate gefunden werden.

Der Erfindung liegt die Aufgabe zugrunde, einen kompakten und leichten Abstandsschalter zur schnellen Abstandsbestimmung, einen Bestückkopf sowie einen Bestückautomaten zu schaffen, welche die Bestückung von Substraten mit Bauelementen bei einer hohen Bestückleistung und gleichzeitig einer geringen Ausfallrate ermöglichen. Der Erfindung liegt ferner die Aufgabe zugrunde, ein Verfahren zum Bestücken von Substraten mit Bauelementen zu schaffen, welches ebenfalls bei hoher Bestückleistung eine geringe Ausfallrate durch beschädigte Bauelemente, beschädigte Greifvorrichtungen und/oder beschädigte Substrate ermöglicht.

Die vorrichtungsbezogene Aufgabe wird gelöst durch einen optischen Abstandsschalter nach dem konfokalen Abbildungsprinzip mit den Merkmalen des unabhängigen Anspruchs 1. Der Erfindung liegt die Idee zugrunde, dass ein konfokaler optischer Abstandssensor durch eine grobe Vereinfachung des Sensoraufbaus zu einem optischer Abstandsschalter bzw. zu einem optischen Näherungsschalter umgebaut werden kann. Ein optischer Abstandsschalter kann immer dann vorteilhaft eingesetzt werden, wenn ein zu erfassendes zumindest teilweise reflektierendes bzw. lichtstreuendes Objekt in den relativ zu einem stationären Abstandsschalter räumlich ebenfalls stationären Schaltbereich eindringt oder wenn der optische Abstandsschalter zusammen mit dem Schaltbereich relativ zu einem Objekt bewegt wird und bei Über- bzw. bei Unterschreitung eines bestimmten Abstands zwischen Objekt und Abstandsschalter ein Signal ausgegeben wird. Der erfindungsgemäße optische und damit berührungsfrei arbeitende Abstandsschalter hat den Vorteil, dass selbst ein schräger Blick auf die Messstelle zu keinem Messfehler führt und dass aufgrund des sehr kleinen Messfeldes bzw. Schaltbereichs eine minimale Empfindlichkeit gegenüber Streu- oder Reflexionslicht gegeben ist.

Zur Erläuterung des Anspruchs 2 wird zunächst der Verlauf der Intensität des Lichts, welches von einem in den Schaltbereich dringenden Objekts auf das lichtempfangende Element zurückreflektiert bzw. zurückgestreut wird, qualitativ beschrieben. Dafür wird angenommen, dass sich das zu erfassende Objekt zunächst weit außerhalb des Schaltbereichs befindet. In diesem Fall ist die Intensität des auf das lichtempfangende Element zurückgestreuten Lichts sehr gering. Bei Annäherung des Objekts an den Schaltbereich steigt dann die auf das lichtempfangende Element abgebildete zurückreflektierte Intensität an. Diese Intensität erreicht dann ein Maximum, wenn sich die Oberfläche des zu untersuchenden Objekts genau im zentralen Bereich des Schaltbereiches befindet. Bei einer weiteren Annäherung des zu erfassenden Objekts an den optischen Abstandsschalter verlässt die zurückstreuende Objektoberfläche zunächst den zentralen Bereich des Schaltbereiches und dann den gesamten Schaltbereich und die von dem lichtempfangenden Element erfasste Intensität nimmt folglich wieder ab. Damit ergibt sich die in Anspruch 2 beschriebene Möglichkeit, genau festzulegen, wann, d.h. bei welchem Abstand zwischen dem optischen Schalter und dem den Schaltvorgang auslösenden Objekt das Schaltsignal ausgegeben wird. Demnach wird das Signal genau dann ausgelöst, wenn der Verlauf der zurückgestreuten Lichtintensität nach der Überschreitung eines maximalen Intensitätswertes einen bestimmten Schwellenwert unterschreitet. Besonders vorteilhaft erweist sich, wenn der Schwellenwert ein bestimmter Bruchteil des zuvor ermittelten maximalen Intensitätswertes ist. Dies hat den Vorteil, dass insbesondere bei einem stark verrauschten Detektorsignal die Wahrscheinlichkeit für eine ungewollte Fehlauslösung des Signals erheblich reduziert werden kann.

Die Abbildungsoptik des optischen Abstandsschalters kann gemäß Anspruch 3 eine Sammellinse aufweisen. In einer besonders einfachen Form ist die gesamte Abbildungsoptik durch eine einzige Sammellinse realisiert. Die Größe des Schaltbereichs, welcher durch die Fokustiefe und die Fokusbreite bestimmt wird, kann auf einfache Weise berechnet werden. Aus einer elementaren optischen Betrachtung ergibt sich, dass die Schärfentiefe des optischen Abstandsschalters umgekehrt proportional zum Quadrat der numerischen Apertur NA der Linse ist. So ergibt sich beispielweise bei einer numerischen Apertur NA von 0,12 eine Tiefenauflösung von ca. 30 µm. Die Schaltgenauigkeit, d.h. die Genauigkeit mit der bezüglich des Abstandes zwischen dem optischen Schalter und einem den Schaltvorgang auslösenden Objekt das Ausgangssignal ausgegeben wird, ist ca. 10 mal genauer als die Schärfentiefe.

Gemäß einer besonders bevorzugten Ausführungsform der Erfindung nach Anspruch 4 ist das lichtaussendende Element und das lichtempfangende Element des optischen Abstandsschalters mittels eines ersten Endes eines Lichtwellenleiters realisiert. Dieser Lichtwellenleiter ist gemäß Anspruch 5 ein Monomode-Lichtwellenleiter. Somit kann ohne Verwendung von kleinen Lochblenden die optisch aktive Fläche sowohl des lichtaussendenden als auch des lichtempfangenden Elements klein gehalten werden, so dass auf einfache Weise ein annähernd punktförmiges lichtaussendendes und lichtempfangendes Element realisiert werden kann. Die Verwendung eines Monomode-Lichtwellenleiters hat außerdem den Vorteil, dass höhermodiges Licht, welches in den Lichtwellenleiter eingespeist wird, im Verlauf des Lichtdurchgangs durch den Monomode-Lichtwellenleiter insbesondere an Krümmungen des Lichtwellenleiters ausgekoppelt wird. Damit wird sichergestellt, dass das lichtaussendende Element nur Licht mit der transversalen Grundmode emittiert.

Gemäß einer weiteren bevorzugten Ausführungsform der Erfindung nach Anspruch 6 ist ein zweites Endes des Lichtwellenleiters sowohl mit einer Lichtquelle als auch mit einem Lichtdetektor der Lichterfassungsvorrichtung optisch gekoppelt. Dies hat den Vorteil, dass der optische Abstandsschalter in zwei räumlich voneinander getrennte Module aufgeteilt werden kann, wobei die beiden Module über den Lichtwellenleiter optisch gekoppelt sind. Ein erstes rein optisches Modul weist dabei das erste Ende des Lichtwellenleiters und die Abbildungsoptik auf. Das zweite elektrooptische Modul weist eine Lichtquelle, einen Lichtdetektor, das zweite Ende des Lichtwellenleiters und die Lichterfassungseinrichtung auf. Die räumliche Trennung der beiden Module hat den Vorteil, dass insbesondere das rein optische Modul kompakt und bei geringem Gewicht realisiert werden kann. Damit wird der Einsatz des optischen Abstandsschalters auch an Messstellen möglich, welche bisher aufgrund ihrer Unzugänglichkeit und/oder aufgrund von schnellen Bewegungen der Messstelle für eine Erfassung mittels herkömmlichen Abstandssensoren ungeeignet waren.

Gemäß Anspruch 7 ist ein erstes Teilende des zweiten Endes des Lichtwellenleiters mit der Lichtquelle und ein zweites Teilende mit dem Lichtdetektor optisch gekoppelt. Dies kann bevorzugt dadurch erfolgen, dass das zweite Lichtwellenleiterende mittels eines optischen Dreiwege-Lichtwellenleiterkopplers aufgespalten ist und die resultierenden Teilenden mit dem Lichtdetektor bzw. mit der Lichtquelle optisch gekoppelt sind.

Entsprechend der Ausgestaltung der Erfindung gemäß Anspruch 9 ist die Lichtquelle ein Laser, beispielsweise ein Halbleiterlaser, oder eine Leuchtdiode. Die Art der verwendbaren Lichtquellen ist aber keineswegs auf die explizit genannten Lichtquellen beschränkt. Ebenso kann als Lichtquelle beispielsweise eine Gasentladungslampe, eine Halogenlampe, eine gewöhnliche Glühbirne mit Glühfaden oder auch eine Leuchtstoffröhre verwendet werden. Gegebenenfalls muss die räumliche Ausdehnung des von der verwendeten Lichtquelle verursachten lichtemittierenden Elements durch eine geeignete Lochblende reduziert werden. In allen Fällen kann die Wellenlänge des emittierten Lichts im infraroten, im sichtbaren oder im ultravioletten Spektralbereich liegen.

Gemäß einer weiteren Ausführungsform der Erfindung können mit dem optischen Abstandsschalter auch zwei oder mehrere voneinander unabhängige Schaltbereiche überwacht werden. Dies wird gemäß Anspruch 11 dadurch erreicht, dass zumindest ein zusätzliches punktförmiges lichtaussendendes und lichtempfangendes Element vorgesehen ist, welches von der Abbildungsoptik auf einen von den Abbildungseigenschaften der Abbildungsoptik vorbestimmten zusätzlichen vorbestimmten Schaltbereiches abgebildet wird. Durch die Verwendung einer zusätzlichen Lichterfassungseinrichtung, welche mit dem zusätzlichen lichtempfangenden Element gekoppelt ist, kann der zusätzliche Schaltbereich überwacht werden. Die relative Lage der beiden Schaltbereiche wird dabei durch die Abbildungseigenschaften der Abbildungsoptik und durch die räumliche Lage des lichtaussendenden Elements und des zusätzlichen lichtaussendenden Elements bestimmt.

Die vorrichtungsbezogene Aufgabe wird ferner durch einen Bestückkopf gemäß Anspruch 12 und durch einen Bestückautomaten gemäß Anspruch 14 gelöst.

Der Bestückkopf zum Transportieren von Bauelementen von einer Abholstelle zu einer Aufsetzstelle gemäß Anspruch 12 weist eine Greifvorrichtung und einen zuvor beschriebenen optischen Abstandsschalter auf. Die Greifvorrichtung, welche beispielsweise eine Saugpipette ist, wird beim Abholen von Bauelementen relativ zu der Abholstelle und/oder beim Aufsetzen von Bauelementen relativ zu der Aufsetzstelle bewegt. Der optische Abstandsschalter ist zumindest im Verlauf eines Bestückvorgangs relativ zu der Greifvorrichtung in einer festen räumlichen Position angeordnet. Ferner ist der Abstandsschalter derart ausgerichtet, dass während der Bewegung der Greifvorrichtung die Abholstelle oder die Aufsetzstelle in den Schaltbereich eindringt und so von der Lichterfassungseinrichtung ein entsprechendes Ausgangssignal ausgegeben wird. Die feste räumliche Anordnung des Abstandsschalters an der bewegten Greifvorrichtung hat den Vorteil, dass bei der Bestückung von Substraten mit unterschiedlichen, unterschiedliche räumliche Abmessungen aufweisenden Bauelementen und/oder bei einer Variation der Ist-Substratlage von der Soll-Substratlage aufgrund des konfokalen Abstandsschalters optische Parallaxfehler vermieden werden können. Parallaxfehler können beispielsweise dann auftreten, wenn bei der Verwendung eines herkömmlichen optischen Sensors der Schaltbereich von dem Sensor unter einem schrägen Winkel erfasst wird.

Bei dem Bestückkopf gemäß Anspruch 13 ist die Lichterfassungseinrichtung mit einer Steuereinrichtung gekoppelt, welche den Bewegungsablauf der Greifvorrichtung steuern kann. Dies eröffnet die Möglichkeit, dass die Geschwindigkeit der Bewegung der Greifvorrichtung beim Eindringen der Abholstelle oder der Aufsetzstelle in den Schaltbereich geändert werden kann. Insbesondere kann bei einem Aufsetzvorgang eines Bauelements auf ein Substrat die Geschwindigkeit der Bewegung der Greifvorrichtung unmittelbar vor der Berührung des Bauelements mit dem Substrat reduziert werden. Damit kann die Ausfallrate, d.h. eine Fehlbestückung aufgrund eines beschädigten Bauelements und/oder einer beschädigten Greifvorrichtung auch dann minimiert werden, wenn der größte Teil der Transportbewegung des Bauelements zur Maximierung der Bestückleistung mit einer hohen Geschwindigkeit zurückgelegt wird.

Die verfahrensbezogene Aufgabe der Erfindung wird gelöst durch ein Verfahren zum Bestücken von Substraten mit Bauelementen gemäß Anspruch 15.

Gemäß Anspruch 16 kann das Verfahren nicht nur beim Aufsetzen von Bauelementen auf ein Substrat, sondern auch beim Abholen von Bauelementen eingesetzt werden, um die Bestückleistung eines Bestückautomaten weiter zu erhöhen.

Weitere Vorteile und Merkmale der vorliegenden Erfindung ergeben sich aus der folgenden, als beispielhaft anzusehenden Beschreibung von derzeit bevorzugten Ausführungsformen.

In der Zeichnung zeigen:
- Figur 1: den schematischen Aufbau eines optischen Abstandsschalters gemäß einem Ausführungsbeispiel der Erfindung,
- Figur 2: den Anbau eines optischen Abstandsschalters an eine Greifvorrichtung und
- Figur 3: den qualitativen Verlauf der von einem zu erfassenden Objekt zurückgestreuten Lichtintensität und das daraus resultierende Ausgangssignal.

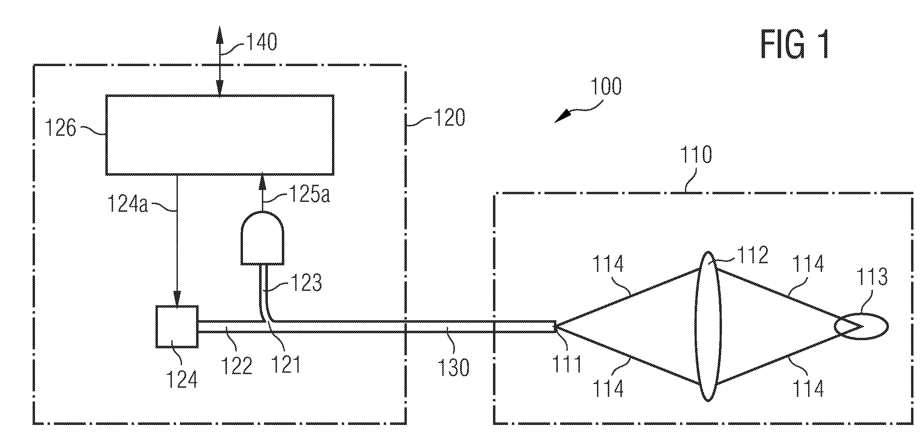

Wie aus Figur 1 ersichtlich, ist ein optischer Abstandsschalter 100 in zwei räumlich voneinander getrennte Module, ein optisches Modul 110 und ein elektrooptisches Modul 120 aufgeteilt. Die beiden räumlich voneinander getrennten Module sind über einen Lichtwellenleiter 130 verbunden, welcher bevorzugt ein sog. Monomode-Lichtwellenleiter ist. Das optische Modul 110 weist ein Faserende 111 auf, welches gleichzeitig als annähernd punktförmiges lichtaussendendes Element und als annähernd punktförmiges lichtempfangendes Element dient. Das von dem Faserende 111 emittierte Licht wird über eine Abbildungsoptik 112 auf einen Schaltbereichs 113 abgebildet. Die Randstrahlen der entsprechenden Lichtbündel sind in Figur 1 mit der Bezugsziffer 114 gekennzeichnet. Das andere Faserende des Lichtwellenleiters 130 ist im elektrooptischen Modul 120 in zwei Teilenden, einem ersten Teilende 122 und einem zweiten Teilende 123, aufgespalten. Die Aufspaltung erfolgt gemäß der in Figur 1 dargestellten Ausführungsform der Erfindung mittels eines Dreiwege-Lichtwellenleiterkopplers 121. Das erste Teilende 122 des Lichtwellenleiters 130 ist mit einer Lichtquelle 124, beispielsweise einer Laserdiode, gekoppelt. Das zweite Teilende 123 des Lichtwellenleiters 130 ist mit einem Lichtdetektor 125, beispielsweise einer Fotodiode, optisch gekoppelt. Die Lichtquelle 124 ist über die Steuerleitung 124a und der Lichtdetektor 125 ist über die Detektorleitung 125a mit einem Elektronikmodul 126 verbunden. Das Elektronikmodul 126 hat die Aufgabe, die von Lichtquelle 124 emittierte Lichtintensität zu steuern und den Detektor 125 sowohl mit einer Versorgungsspannung zu versorgen als auch das von dem Detektor ausgegebene Detektorsignal zu erfassen. Das Elektronikmodul 126 weist gemäß dem hier beschriebenen Ausführungsbeispiel eine Schnittstelle 140 auf, so dass der optische Abstandsschalter 100 mit weiteren Modulen, beispielsweise einem Mikroprozessor, gekoppelt werden kann.

Im folgenden wird die Funktion des optischen Abstandsschalters 100 näher erläutert. Das von dem Faserende 111 emittierte Lichtbündel 114 wird von der Abbildungsoptik 112, welche gemäß dem hier dargestellten Ausführungsbeispiel eine einfache Bikonvexlinse oder besser eine biasphärische Linse ist, auf den Schaltbereich 113 abgebildet. Die räumliche Abmessung des Schaltbereichs 113 wird dabei durch die Fokustiefe und die Fokusbreite der durch die Linse 112 vorgenommenen optischen Abbildung bestimmt. Bewegt sich nun ein zumindest teilweise reflektierendes bzw. lichtstreuendes Objekt von außen in den Schaltbereich 113, so wird die von diesem Objekt zurückreflektierte bzw. zurückgestreute Lichtintensität von der Abbildungsoptik 112 auf das Faserende 111 abgebildet. Die auf das Faserende 111 treffende Lichtintensität steigt somit bei Annäherung eines Objekts an den Schaltbereich 113 an und erreicht dann ein Maximum, wenn die Oberfläche des zu erfassenden Objekts gerade auf den zentralen Bereich des Schaltbereichs 113 trifft. Bei weiterer Annäherung des zu erfassenden Objekts an die Abbildungsoptik 112 wird die Intensität des auf das Faserende 111 zurückgestreuten Lichts wieder abnehmen. Aus dem Verlauf der zurückgestreuten Lichtintensität, welche von dem Lichtdetektor 125 erfasst und als elektronisches Detektorsignal an das Elektronikmodul 126 weitergegeben wird, kann ein Ausgangssignal generiert werden, welches bei einem bestimmten Abstand zwischen dem zu erfassenden Objekt und dem optischen Abstandsschalter 100 bzw. der Abbildungsoptik 112 ausgegeben wird. Die Ermittlung des Ausgangssignals aus der von dem Lichtdetektor 125 erfassten zurückgestreuten Lichtintensität erfolgt in dem Elektronikmodul 126. Alternativ kann die Auswertung des Verlaufs der zurückgestreuten Lichtintensität auch von einem nicht dargestellten Prozessor durchgeführt werden, welcher über die Schnittstelle 140 mit dem Elektronikmodul 126 gekoppelt ist.

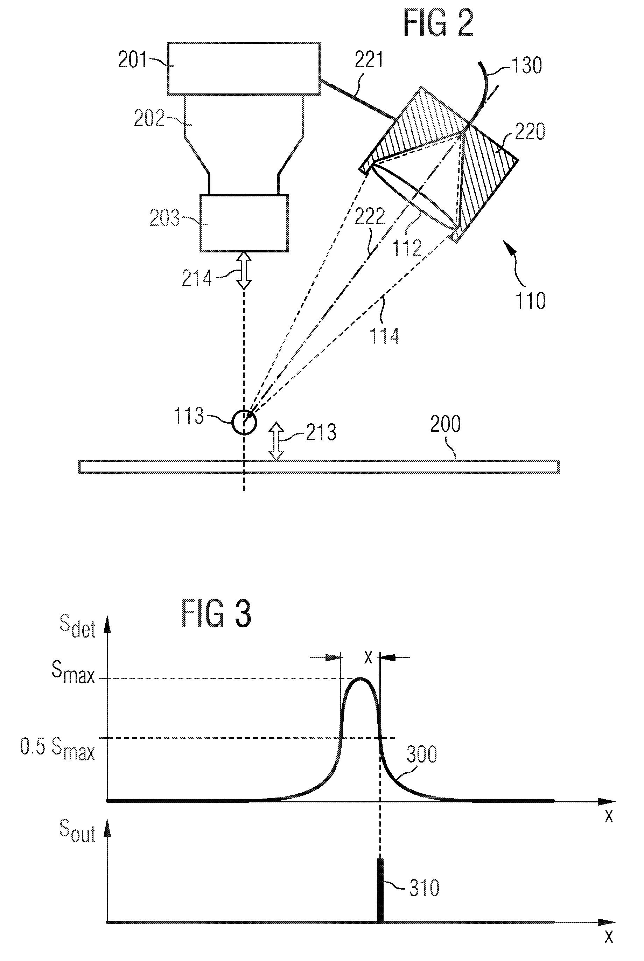

Figur 2 zeigt die Verwendung eines optischen Abstandsschalters für die automatische Bestückung eines Substrats 200 mit Bauelementen. Komponenten des optischen Abstandsschalters, welche bereits anhand von Figur 1 erläutert wurden, sind in Figur 2 mit den gleichen Bezugszeichen versehen und werden im folgenden nicht weiter erläutert. Wie aus Figur 2 ersichtlich, ist das optische Modul 110, welches über einen Lichtwellenleiter 130 mit einem nicht dargestellten elektrooptischen Modul des optischen Abstandsschalters 100 gekoppelt ist, mittels einer starren Verbindung 221 an eine Halterung 201 gekuppelt. Die Halterung 201, welche zu einem Bestückkopf, beispielsweise einem Revolverkopf gehört, ist relativ zu dem Bestückkopf derart beweglich, dass die Greifvorrichtung 202, welche gemäß dem hier dargestellten Ausführungsbeispiel eine Saugpipette ist, relativ zu dem Substrat 200 bewegt werden kann. Auf diese Weise kann ein Bauelement 203, welches von der Greifvorrichtung 202 gehalten wird, auf das Substrat 200 aufgesetzt werden. Bei einer Bewegung der Halterung 201 in vertikaler Richtung wird sowohl das Bauelement 203 als auch der Schaltbereich 113 bewegt, dessen räumliche Lage durch die optische Achse 222 und durch die Randstrahlen 114 des optischen Moduls 110 bestimmt wird. Der Bewegungsverlauf des Bauelements 203 ist durch den Doppelpfeil 214 und der Bewegungsverlauf des Schaltbereichs 113 ist durch den Doppelpfeil 213 gekennzeichnet. Die stabile räumliche Lage der optischen Achse 222 relativ zu der Halterung 201 ist sowohl durch die starre Verbindung 221 als auch durch das Gehäuse 220 bestimmt, welches die Abbildungsoptik 112 in einer definierten räumlichen Position relativ zu dem Faserende des Lichtwellenleiters 130 und zu der Halterung 201 hält.

Das optische Modul 110 des optischen Abstandsschalters wird so justiert, dass das elektrooptische Modul 120 das Unter- bzw. das Überschreiten einer bestimmten Entfernung zwischen der Greifvorrichtung 202 von der Oberfläche des zu bestückenden Substrats 200 durch ein Auslösesignal anzeigt. Bei der Justierung des optischen Abstandsschalters 100 wird der Schaltbereich 113 derart ausgerichtet, dass es bei hochgefahrener Greifvorrichtung 202 soweit von der Oberfläche des zu bestückenden Substrats entfernt ist, dass der optische Abstandsschalter 100 kein Signal ausgibt. Beim Herunterfahren der Greifvorrichtung 202 wird bei Erreichen des eingestellten Schaltabstandes zwischen Substrat 200 und Bauelement 203 bzw. zwischen einem in einer Abholposition befindlichen Bauelement und der Greifvorrichtung 202 ein Signal an eine Steuerungseinrichtung (nicht dargestellt) der Greifvorrichtung 202 ausgegeben, welches dazu verwendet wird, um den Bewegungsverlauf der Greifvorrichtung 202 derart zu korrigieren, dass das Bauelement 203 mit einer reduzierten Geschwindigkeit auf das Substrat 200 aufgesetzt wird. Beim Aufsetzen des Bauelements 203 auf das Substrat 200 meldet ein nicht dargestellter zweiter Sensor den mechanischen Kontakt mit der Substratoberfläche und die Bewegung der Greifvorrichtung 202 wird gestoppt. Auf diese Weise wird trotz einer insgesamt hohen Bestückleistung ein minimaler Auftreffimpuls des Bauelements 203 auf das Substrat 200 gewährleistet, so dass die Fehlerwahrscheinlichkeit des Bestückprozesses durch ein beschädigtes Substrat, ein beschädigtes Bauelement und/oder eine beschädigte Greifvorrichtung ebenfalls minimiert wird.

Figur 3 zeigt den Verlauf 300 des Detektorsignals S_{det}, wenn ein zu erfassendes Objekt in den Schaltbereich 113 dringt oder wenn sich der optische Abstandsschalter 100 in Richtung auf eine Oberfläche, insbesondere auf die Oberfläche eines Substrates 200, zu bewegt. Bei der Bewegung des optischen Abstandsschalters in Richtung auf die Substratoberfläche wird das gemessene Detektorsignal S_{det} ansteigen, sobald das Substrat 200 in den Schaltbereich 113 eindringt. Mittels eines digitalen "Sample and Hold" - Verfahrens wird das Maximum der Detektorintensität Sₘₐₓ bestimmt. Das Ausgangssignal wird genau dann ausgegeben, wenn die Intensität nach dem Maximum Sₘₐₓ auf die Hälfte abgefallen ist. Wenn zusätzlich eine Auslöseschwelle verwendet wird, die zumindest knapp über dem Rauschpegel liegt, dann wird sichergestellt, dass beispielsweise durch Rauschen verursachten Schwankungen in dem Ausgangssignal des Detektors 125 nicht zu einer versehentlichen Auslösung des Ausgangssignals führen. Ein weiterer Vorteil besteht darin, dass der Zeitpunkt der Ausgabe des Ausgangssignals unabhängig von der Fahrbewegung, d.h. von der Geschwindigkeit und von der Beschleunigung des optischen Abstandsschalters 100 ist. Die Halbwertsbreite Δx des Detektorsignals S_{det} ist umgekehrt proportional zum Quadrat der numerischen Apertur NA der verwendeten Abbildungsoptik.

Zusammenfassend schafft die Erfindung einen konfokalen optischen Abstandsschalter 100 zur schnellen berührungsfreien Abstandsbestimmung mit einem punktförmigen gleichzeitig lichtaussendenden und lichtempfangenden Element, mit einer Abbildungsoptik 112, welche das lichtaussendende Element auf einen durch die Abbildungseigenschaften der Abbildungsoptik vorgegebenen Schaltbereich 113 abbildet, und mit einer mit dem lichtempfangenden Element gekoppelten Lichterfassungseinrichtung, von welcher ein Signal 310 ausgegeben wird, wenn sich ein zumindest teilweise reflektierendes bzw. lichtstreuendes Objekt in den Schaltbereich 113 bewegt und reflektiertes bzw. gestreutes Licht auf das lichtempfangende Element trifft. Bevorzugt ist das lichtaussendende und das lichtempfangende Element durch ein Lichtwellenleiterende 111 realisiert. Somit kann der optische Abstandsschalter 100 in zwei getrennte, über den Lichtwellenleiter 130 miteinander verbundene Module aufgeteilt werden, wobei ein rein optisches Modul 110 kompakt und bei geringem Gewicht realisiert werden kann. Die Erfindung schafft ferner ein Verfahren zum Bestücken von Substraten 200 mit Bauelementen 203 unter Verwendung des Abstandsschalters 100, bei dem die Aufsetzgeschwindigkeit der Bauelemente 203 unmittelbar vor dem Aufsetzen reduziert und somit bei einem insgesamt schnellen Bestückvorgang der Aufprall der Bauelemente 203 auf das Substrat 200 oder der Aufprall der Greifvorrichtung 202 auf das Bauelement 203 auf unkritische Werte reduziert wird.

## Patentansprüche

1. Optischer Abstandsschalter zur schnellen berührungsfreien Abstandsbestimmung nach dem konfokalen Abbildungsprinzip mit
• einem annähernd punktförmigen lichtaussendenden Element,
• einer Abbildungsoptik (112), welche das lichtaussendende Element auf einen durch die Abbildungseigenschaften der Abbildungsoptik (112) vorbestimmten Schaltbereich (113) abbildet,
• einem annähernd punktförmigen lichtempfangenden Element, welches an der selben Stelle wie das lichtaussendende Element oder konfokal zu dem lichtaussendenden Element angeordnet ist, und
• einer Lichterfassungseinrichtung, welche mit dem lichtempfangenden Element gekoppelt ist,
wobei
die Lichterfassungseinrichtung derart ausgebildet ist, dass ein Signal (310) ausgegeben wird, wenn
- sich ein Objekt in den Schaltbereich (113) bewegt und
- von dem lichtaussendenden Element über die Abbildungsoptik (112) auf das Objekt treffendes Licht zumindest teilweise zurückgestreut und das zurückgestreute Licht von der Abbildungsoptik (112) auf das lichtempfangende Element abgebildet wird.

2. Abstandsschalter gemäß Anspruch 1, bei dem die Lichterfassungseinrichtung derart ausgebildet ist, dass das Signal (310) ausgegeben wird, wenn der Verlauf der Intensität des Lichts, welches von dem Objekt auf das lichtempfangende Element zurückgestreut wird, nach der Überschreitung eines maximalen Intensitätswertes (Sₘₐₓ) einen vorbestimmten oder einen durch den maximalen Intensitätswert (Sₘₐₓ) bestimmten relativen oder absoluten Intensitätswert unterschreitet.

3. Abstandsschalter gemäß einem der Ansprüche 1 bis 2, bei dem die Abbildungsoptik (112) eine Sammellinse aufweist.

4. Abstandsschalter gemäß einem der Ansprüche 1 bis 3, bei dem das lichtaussendende Element und das lichtempfangende Element mittels eines ersten Endes (111) eines Lichtwellenleiters (130) realisiert sind.

5. Abstandsschalter gemäß Anspruch 4, bei dem der Lichtwellenleiter (130) ein Monomode-Lichtwellenleiter ist.

6. Abstandsschalter gemäß einem der Ansprüche 4 bis 5, bei dem ein zweites Ende des Lichtwellenleiters (130) sowohl mit einer Lichtquelle (124) als auch mit einem Lichtdetektor (125) der Lichterfassungsvorrichtung optisch gekoppelt ist.

7. Abstandsschalter gemäß Anspruch 6, bei dem das zweite Ende des Lichtwellenleiters (130) in zwei Teilenden aufgespalten ist, wobei ein erstes Teilende (122) mit der Lichtquelle (124) und ein zweites Teilende (123) mit dem Lichtdetektor (125) optisch gekoppelt ist.

8. Abstandsschalter gemäß Anspruch 6, bei dem die Lichtquelle (124) und der Lichtdetektor (125) mittels einer einen Strahlteiler aufweisenden Fasereinkoppelvorrichtung mit dem zweiten Ende des Lichtwellenleiters (130) optisch gekoppelt sind.

9. Abstandsschalter gemäß einem der Ansprüche 6 bis 8, bei dem die Lichtquelle (124) ein Laser oder eine Leuchtdiode ist.

10. Abstandsschalter gemäß einem der Ansprüche 6 bis 9, bei dem der Lichtdetektor (125) ein Sekundärelektronenvervielfacher, eine Photodiode oder eine Avalache-Photodiode ist.

11. Abstandsschalter gemäß einem der Ansprüche 1 bis 10, zusätzlich aufweisend
• zumindest ein zusätzliches annähernd punktförmiges lichtaussendendes Element, welches von der Abbildungsoptik (112) auf einen durch die Abbildungseigenschaften der Abbildungsoptik (112) vorbestimmten zusätzlichen Schaltbereich abgebildet wird,
• zumindest ein zusätzliches annähernd punktförmiges lichtempfangendes Element, welches an der selben Stelle wie das zusätzliche lichtaussendende Element oder konfokal zu dem zusätzlichen lichtaussendenden Element angeordnet ist, und
• eine zusätzliche Lichterfassungseinrichtung, welche mit dem zusätzlichen lichtempfangenden Element gekoppelt ist,
wobei
die zusätzliche Lichterfassungseinrichtung derart ausgebildet ist, dass ein zusätzliches Signal ausgegeben wird, wenn
- sich ein Objekt in den zusätzlichen Schaltbereich bewegt und
- von dem zusätzlichen lichtaussendenden Element über die Abbildungsoptik (112) auf das Objekt treffendes Licht zumindest teilweise zurückgestreut und das zurückgestreute Licht von der Abbildungsoptik auf das zusätzliche lichtempfangende Element abgebildet wird.

12. Bestückkopf zum Transportieren von Bauelementen von einer Abholstelle zu einer Aufsetzstelle mit
• einer Greifvorrichtung (202), welche beim Abholen von Bauelementen (203) relativ zu der Abholstelle und/oder beim Aufsetzen von Bauelementen (203) relativ zu der Aufsetzstelle bewegt wird,
• einem optischen Abstandsschalter (100) gemäß einem der Ansprüche 1 bis 11, welcher zumindest im Verlauf eines Bestückvorgangs relativ zu der Greifvorrichtung (202) in einer festen räumlichen Position angeordnet ist,
wobei
der Abstandsschalter (100) derart ausgerichtet ist, dass während der Bewegung der Greifvorrichtung (202) die Abholstelle oder die Aufsetzstelle in den Schaltbereich (113) eindringt.

13. Bestückkopf gemäß Anspruch 12, bei dem die Lichterfassungseinrichtung mit einer die Bewegung der Greifvorrichtung (202) steuernden Steuereinrichtung gekoppelt ist, so dass die Geschwindigkeit der Bewegung beim Eindringen der Abholstelle oder der Aufsetzstelle in den Schaltbereich (113) änderbar ist.

14. Bestückautomat zum Bestücken von Substraten (200) mit Bauelementen (203) unter Verwendung eines Bestückkopfs gemäß einem der Ansprüche 12 bis 13.

15. Verfahren zum Bestücken von Substraten (200) mit Bauelementen (203), bei dem
• ein mit einer Greifvorrichtung (202) gehaltenes Bauelement (203) relativ zu einer Aufsetzstelle bewegt wird,
• die Aufsetzstelle in den Schaltbereich (113) eines optischen Abstandsschalters (100) gemäß einem der Ansprüche 1 bis 11 eindringt,
• beim Eindringen der Aufsetzstelle in den Schaltbereich (113) ein Signal (310) ausgelöst wird, welches an eine die Bewegung der Greifvorrichtung (202) steuernden Steuereinrichtung übergeben wird, und
• die Geschwindigkeit der Bewegung der Greifvorrichtung (202) geändert wird.

16. Verfahren gemäß Anspruch 15, bei dem
• eine kein Bauelement haltende Greifvorrichtung (202) relativ zu einer Abholstelle bewegt wird,
• die Abholstelle in den oder in einen zusätzlichen Schaltbereich (113) eines optischen Abstandsschalters (100) gemäß Anspruch 10 eindringt,
• beim Eindringen der Abholstelle in den Schaltbereich (113) ein Signal (310) ausgelöst wird, welches an eine die Bewegung der Greifvorrichtung (202) steuernden Steuereinrichtung übergeben wird, und
• die Geschwindigkeit der Bewegung der Greifvorrichtung (202) geändert wird.

17. Verfahren gemäß einem der Ansprüche 15 bis 16, bei dem
• das mit der Greifvorrichtung (202) gehaltene Bauelement (203) in Richtung der Aufsetzstelle bewegt wird und/oder
• die kein Bauelement haltende Greifvorrichtung (202) in Richtung der Abholstelle bewegt wird.

18. Verfahren gemäß einem der Ansprüche 15 bis 17, bei dem die Geschwindigkeit der Bewegung der Greifvorrichtung (202) reduziert wird.

19. Verfahren gemäß einem der Ansprüche 15 bis 18, bei dem das Signal (310) ausgelöst wird, wenn der Verlauf der Intensität des Lichts, welches von der Aufsetzstelle oder von der Abholstelle auf das lichtempfangende Element zurückgestreut wird, nach der Überschreitung eines maximalen Intensitätswertes (Sₘₐₓ) einen vorbestimmten oder einen durch den maximalen Intensitätswert (Sₘₐₓ) bestimmten relativen oder absoluten Intensitätswert unterschreitet.
